# EUROPEAN PATENT APPLICATION

(11) **EP 2 927 822 A1**
(43) Date of publication of application: **07.10.2015**
(21) Application number: 15160778.5
(22) Date of filing: 25.03.2015
(51) Int. Cl.: G06F 17/30

(54) **SYSTEM AND METHOD FOR LINGUIST-BASED HUMAN/MACHINE INTERFACE COMPONENTS**

(30) Priority: 02.04.2014 US 201461974417 P
(71) Applicant: Ims Health Incorporated, Danbury, CT 06810 (US)
(72) Inventor: Hahn, Christopher, Seattle, WA 98102 (US); Cowhig, Joshua, Redmond, WA 98053 (US)
(74) Representative: Keane, Paul Fachtna

(57) **Abstract**

Apparatus and method to serialize electronic localized data, or to produce electronic localized data from serialized data. The apparatus to serialize includes: a receiver to collect electronic localized data; a processor coupled to the receiver, the processor configured to receive the electronic localized data collected by the receiver; a memory coupled to the processor, the memory configured to store an application program; an interface to a serialization module, to serialize electronic localized data collected by the receiver, wherein the interface is callable from the application program; and a storage module configured to store the serialized data from the serialization module.

## Description

### CROSS-REFERENCE TO RELATED APPLICATIONS

This application claims the benefit of U.S. Provisional Patent Application Ser. No. 61/974,417, filed on April 2, 2014, the entire content of which is hereby incorporated by reference in its entirety.

### BACKGROUND

### Field

Embodiments of the present invention generally relate to data localization, and, in particular, to a system and method to serialize data in light of information relevant to the user or transaction location, such as cultural information.

### Description of Related Art

Development platforms typically have a wide range of tools available for taking information from users, presenting information to users, and serializing that information to and from hardware where the information is stored in a tangible, computer-readable format that is invariant to formatting used for human-readable format. A problem with a wide range of tools, however, is while they make it possible to build anything, they do not make it easy to build an application that supports local culture data representations, a wide range of enterprise data types, or that handles time zone complexities, in a robust and consistent manner.

Therefore, a need exists to facilitating overcoming the shortcomings identified above.

### BRIEF SUMMARY

Embodiments in accordance with the present disclosure provide a logical layer between an underlying platform, end users, storage sub-systems, and application developers. Various embodiments may be referred to herein as "The Linguist" or similar. The Linguist system provides a set of consistent principles and components that make it easy for application developers to build a robust and consistent application without having to devote excessive developer resources to address platform complexities. This speeds up application development, makes for a lower error rate in developed applications, and greatly improves the maintainability of an application.

Embodiments in accordance with the present disclosure make it possible to allow developers to provide a standards compliant reduced complexity approach to formatting and parsing information to/from end users and computer systems.

Embodiments in accordance with the present disclosure include apparatus and method to serialize electronic localized data, or to produce electronic localized data from serialized data. The apparatus to serialize includes: a receiver to collect electronic localized data; a processor coupled to the receiver, the processor configured to receive the electronic localized data collected by the receiver; a memory coupled to the processor, the memory configured to store an application program; an interface to a serialization module, to serialize electronic localized data collected by the receiver, wherein the interface is callable from the application program; and a storage module configured to store the serialized data from the serialization module.

In another embodiment in accordance with the present disclosure, an apparatus to produce electronic localized data from serialized data includes: a storage module configured to store serialized data; a processor coupled to the storage module, the processor configured to retrieve the serialized data from the storage module; a memory coupled to the processor, the memory configured to store an application program; an interface to a serialization module, the serialization module to produce electronic localized data from serialized data, wherein the interface is callable from the application program; and a transmitter coupled to the processor, the transmitter configured to transmit the electronic localized data.

In another embodiment in accordance with the present disclosure, a method to produce electronic localized data from serialized data includes: retrieving, by a processor coupled to a memory, serialized data from a storage module; retrieving a configuration information relevant to the electronic localized data; invoking, by the processor, a serialization module to produce electronic localized data from the serialized data; and transmitting the electronic localized data.

The preceding is a simplified summary of embodiments of the disclosure to provide an understanding of some aspects of the disclosure. This summary is neither an extensive nor exhaustive overview of the disclosure and its various embodiments. It is intended neither to identify key or critical elements of the disclosure nor to delineate the scope of the disclosure but to present selected concepts of the disclosure in a simplified form as an introduction to the more detailed description presented below. As will be appreciated, other embodiments of the disclosure are possible utilizing, alone or in combination, one or more of the features set forth above or described in detail below.

The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include", "including", and "includes" mean including but not limited to. To facilitate understanding, like reference numerals have been used, where possible, to designate like elements common to the figures. Optional portions of the figures may be illustrated using dashed or dotted lines, unless the context of usage indicates otherwise.

### BRIEF DESCRIPTION OF THE DRAWINGS

The above and still further features and advantages of the present invention will become apparent upon consideration of the following detailed description of embodiments thereof, especially when taken in conjunction with the accompanying drawings wherein like reference numerals in the various figures are utilized to designate like components, and wherein:
FIG. 1 is a network diagram in accordance with one embodiment;
FIG. 2 illustrates one embodiment of a computer to support localization computing;
FIG. 3 illustrates a process to convert an input string to a numeric object in accordance with an embodiment of the present disclosure; and
FIG. 4 illustrates a process to convert a numeric data object into an output string value in accordance with an embodiment of the present disclosure.

### DETAILED DESCRIPTION

The detailed description that follows is represented largely in terms of processes and symbolic representations of operations by conventional computer components, including a processor, memory storage devices for the processor, connected display devices, and input devices. Furthermore, these processes and operations may utilize conventional computer components in a heterogeneous distributed computing environment, including remote file Servers, computer Servers, and memory storage devices. Each of these conventional distributed computing components is accessible by the processor via a communication network.

Reference is now made in detail to the description of the embodiments as illustrated in the drawings. While embodiments are described in connection with the drawings and related descriptions, there is no intent to limit the scope to the embodiments disclosed herein. On the contrary, the intent is to cover all alternatives, modifications, and equivalents. In alternate embodiments, additional devices, or combinations of illustrated devices, may be added to, or combined, without limiting the scope to the embodiments disclosed herein.

Internationalization (often referred to as "il8n") and localization (often referred to as "L10n") refer to the adaptation of computer software to different languages, regional differences and technical requirements of a target market. Internationalization refers to designing a software application so that it may be adapted to various languages and regions without engineering changes. Localization refers to adapting internationalized software for a specific region or language by adding locale-specific components and translating text. Internationalization ideally is performed only once, as an integral part of ongoing development. On the other hand, localization may be performed multiple times, for different locales, using the infrastructure or flexibility provided by internationalization.

With respect to computing systems, internationalization and localization may involve adjusting the display of information for local customs or standards. The electronic storage of such information in a computing system does not necessarily change, but the display of information outputted from the computing system (e.g., a string value to be displayed, to a user, on a display), or the interpretation of information inputted into the computing system (e.g., a string value from a user keyboard), may change. The information subject to internationalization and localization may include textual information (e.g., menu displays, error messages, etc.) and numeric information (e.g., numbers, time, currency, etc.). Some information may include characteristics of both textual and numeric (e.g., the "amount" line of a check). Embodiments described herein are primarily directed to the display and interpretation of numeric information, but persons of skill in the art will recognize how to adapt such embodiments to the display and interpretation of textual information.

This process is related to serialization, which is known as a process of translating data structures or objects from a first format (e.g., a localized format) into a second format (e.g., a serialized format) that can be stored (for example, in a file or memory buffer), or transmitted across a network connection link, and reconstructed later in the same or another computer environment back into the first format. When the resulting series of bits is reread according to the serialization format, it can be used to create a semantically identical clone of the original object in its localized format. Serialization may refer to the process of converting a data structure or object either from the localized format to the serialized format, or from the serialized format back to the localized format. In embodiments in accordance with the present disclosure, serialization is one step used to display numeric data to, or store numeric data from, a human user. However, serialization by itself does not address changing or adjusting the translation of data structures (e.g., the translator itself) based upon local customs or standards.

Changes to the interpretation of numeric information may affect, in any combination, one or more of: Formatting of numbers (e.g., decimal separator and digit grouping); Time format (e.g., 12-hour or 24-hour format, military format, reference to Greenwich Mean Time (GMT), compensation for daylight savings time (*see* 15 U.S.C. § 260(a)), etc.); Date format (e.g., American convention of mm/dd/yyyy or European convention of yyyy/mm/dd, four-digit or two-digit year number, use of different calendars such as Gregorian, Julian, Chinese or Jewish, etc.); currency symbols and representation (e.g., dollar, euro, yen, yuan, etc.); Writing direction (e.g., left-to-right in English, right-to-left in Hebrew and Arabic, and optionally vertical in some Asian languages); and so forth. Currency symbols and representation are specified by International Standards Organization (ISO) 4217:2008, "Codes for the representation of currencies and funds," published 2008, which is hereby incorporated by reference in its entirety.

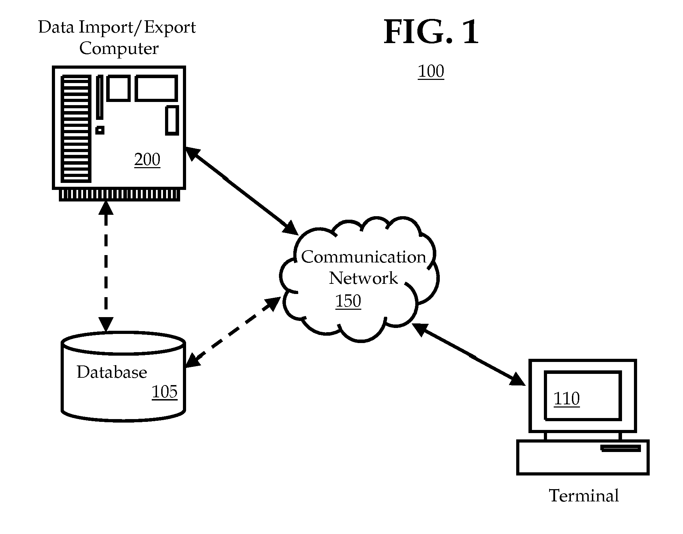

FIG. 1 illustrates a number of interconnected devices in accordance with one embodiment. Numeric information database 105, terminal 110 capable of displaying numeric information, and numeric information computer 200 are connected to network 150. In various embodiments, network 150 comprises communication switching, routing, and/or data storage capabilities. In various embodiments, network 150 may comprise some or all of the Internet, one or more intranets, and wired and/or wireless network portions. In various embodiments, there may be more than one numeric information database 105, and/or terminal 110. Moreover, while FIG. 1 shows a single numeric information computer 200, in alternative embodiments, the functions, processes, and routines performed by numeric information computer 200 could be hosted or distributed among two or more different devices. Many embodiments may use multiple devices to comprise one logical device--for example, when numeric information computer 200 and/or numeric information database 105 are executed or hosted in a "cloud computing" environment.

Alternatively, in some embodiments, two or more of numeric information computer 200, terminal 110, and/or numeric information database 105 may be hosted on a single physical computing device. For example, in some embodiments, numeric information database 105 may be a process executing on numeric information computer 200.

Terminal 110 may be any device that is capable of communicating with numeric information computer 200, including desktop computers, laptop computers, mobile phones and other mobile devices, PDAs, set-top boxes, and the like.

In various embodiments, numeric information database 105 may include a set of records representing numeric information as described above. Some such types of records (e.g., account balances) may refer to individual persons. Other such types of records may typically refer to entities such as financial institutions, and the like. Some record types may typically refer to both individual persons and entities. In some situations, it might be desirable to use mixed representations. For example, a North American customer who is traveling and uses an ATM in Europe may prefer to see some information (e.g., a withdrawal amount) in either the local currency or in the currency of the home country (with appropriate scaling for the exchange rate). On the other hand, some other information (e.g., a remaining balance) may be displayed only in the format of the home country, and yet other information (e.g., local time) only in the format of the local culture. In some embodiments, a user may be offered a choice of preferred formats (e.g., home culture and local culture) when traveling to a foreign country or foreign culture, and the selected preferred format may be stored as a preferred format.

The data populating the numeric information database 105 may have come from various sources, and may be updated on an ongoing and/or periodic basis.

A single nation may have more than one culture relevant to embodiments in accordance with the present disclosure. For example, Canada has English-speaking cultures and French-speaking cultures. Some countries (e.g., Switzerland, Belgium) may have multiple co-existing cultures that have indistinct boundaries. Some countries (e.g., the United States) may span multiple time zones having distinct boundaries that may affect displays of local time. Some information may be nationality-specific and potentially spanning multiple cultures (e.g., formatting related to the local currency).

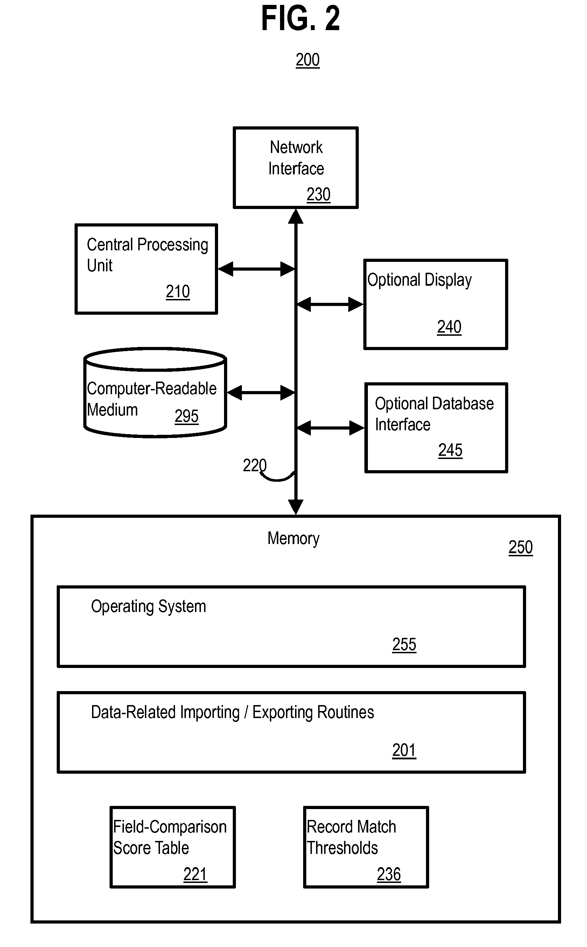

FIG. 2 illustrates an exemplary numeric information import computer 200. The example system of FIG. 2 depicts a number of subsystems, modules, routines, and engines, some or all of which may by employed in a particular embodiment; the systems, modules, routines, and engines are not, however, limited to those illustrated. Other embodiments could be practiced in any number of logical software and physical hardware components and modules. The modules and components are listed herein merely for example.

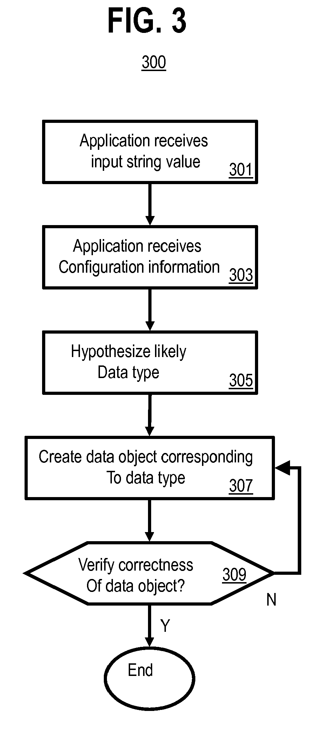

Numeric information computer 200 includes a processing unit 210, a memory 225, and an optional display 240, all interconnected, along with network interface 230, via bus 220. Memory 250 generally comprises a random access memory ("RAM"), a read only memory ("ROM"), and/or a permanent mass storage device, such as a disk drive. In some embodiments, memory 250 may also comprise a local and/or remote database, database server, and/or database service (e.g., numeric information database 105). In other embodiments, network interface 230 and/or other database interface (not shown) may be used to communicate with a database (e.g., numeric information database 105). Memory 250 stores program code and/or data for some or all of a numeric-information-related record(s) import and export routines (see FIGs. 3-4), a field comparison score table 221, and a set of record match thresholds 236. In addition, memory 250 also stores an operating system 255.

These and other software components may be loaded from a computer readable storage medium 295 into memory 250 of numeric information data computer 200 using a drive mechanism (not shown) associated with a non-transient, tangible, computer readable storage medium 295, such as a floppy disc, tape, DVD/CD-ROM drive, memory card. In some embodiments, software components may also be loaded via the network interface 230 or other non-storage media.

A dictionary definition of a "linguist" includes "someone who is skilled in languages." Computer program applications that read information inputted by a human being, or provide output information in the form of a string value to a human being, will employ a human-computer interface that bridges a gap between the human being and the computer. Programming languages or frameworks provide facilities (e.g., callable functions, object libraries, etc.) for doing this. Examples from languages like C++ and C# for this purpose include printf, string. Format (), uInt32. Parse (). Yet, these conventional facilities lack standardization and ease of use for a software developer.

To better understand problems solved by embodiments in accordance with the present disclosure, it is helpful to consider an example. Using C# as an example programming language, take the case of formatting a number for a user that is, e.g., culture-specific or nationality-specific (e.g. culture English-US, or culture German-Germany). To do this we might write the following code illustrated in Table 1 below:

**Table 1.**

| |
|---|
| ```
       double n = 1234567.89;
       var x = String.Format(CultureInfo.CurrentCulture, "{0:N2}", n);
        // x contains 1,234,567.89 if culture is en-US, 1.234.567,89 if culture
               is de-DE.
``` |

The string. Format () method is a .NET platform element that gives application developers much flexibility, but such flexibility quickly leads to difficulties with application maintainability and consistency. The string. Format () method supports a wide range of formatting variations to handle different platform related cases, which is good for the platform, but bad for regular software development. Different developers may define differently the meaning of "{0:N2}", sometimes defining that it should show decimal places, sometimes not, sometimes correctly including culture settings, sometimes not. Furthermore, developers routinely have to look up the meaning of "N", which takes time. These are examples of too many unnecessary choices at a level of software abstraction that concerns the developer, thus leading to application complexity.

Limiting unnecessary choices will allow for faster and more maintainable software development. Unnecessary choices may be limited by handling localization-related choices at a level of abstraction or software implementation that ordinarily does not involve the attention of a software developer. Embodiments in accordance with the present disclosure contain and limit a need for a software developer to attend to such implementation details. Embodiments enable a software developer to write a much more maintainable and consistent piece of formatting code like the following as illustrated below in Table 2:

**Table 2.**

| |
|---|
| ```
       Double n = 1234567.89;
       var x = Linguist.Represent(n). AsNumber () ;
``` |

Embodiments in accordance with the present disclosure may be implemented in various ways by use of a serialization module. The serialization module may include one or more of: a middleware software layer; a public library of functions or subroutine calls, along with a published application programming interface (API) to access the public library; a set of object classes along with associated methods and attributes; and so forth. In one embodiment, the serialization module may be hosted on the same computing device as an application program that calls or invokes the serialization module. In another embodiment, the serialization module may be hosted on a separate computing device (e.g., in a cloud storage) that is in communicative contact with the computing device upon which the application program is executing.

This example illustrates reduction of complexity and choice, by adding an explicit intent to format the variable "n" as a number. Developers do not have to choose a format "N", or a number of decimal places "2", or a specific culture. Instead, software developers will know that the number "n" will be formatted to the application's default specifications. Default specifications may be based upon detection of the data type of "n", and application of a predetermined format appropriate for "n". The appropriate format for "n", in turn, may be based upon rules for the culture, nation, geographic location, etc. that the user presently is located in, and for their home location. The complete rules appropriate for substantially all cultures, nations, geographic locations, etc. that the user is likely to encounter may be internationalized once during development of the software embodiments of the invention. User preferences may be read separately, with default values (e.g., preferred culture in a multicultural country). Thereafter, application programs that access the embodiments can obtain localization benefits of the embodiments by invoking an appropriate API, function, object class or method, etc.

Thus, application software that accesses embodiments in accordance with the present disclosure will present to their users a consistent numeric representation, appropriate to the local culture, every time a number is displayed using the embodiments described herein. Embodiments are usable from multiple software applications residing on a computing device such as numeric information computer 200 of FIG. 1.

Some social networking platforms of the known art may expose a formatting library (e.g., Facebook™ Folly) that provides some formatting capabilities to external software developers, but such libraries do not reduce complexity or enforce standards through convention. Instead, such formatting libraries often try to *add* complexity rather than reduce it, and do not provide a logical paradigm (e.g., a programming model) that does this as well as is done by embodiments in accordance with the present disclosure.

The background art attempts to add complexity by adding more features and/or ways to do things, as opposed to hiding or simplifying choices for software developers. For example, embodiments in accordance with the present disclosure may perform currency and phone number formatting, whereas the known background art does not perform this formatting. Embodiments support a logical separation between culture specific and non-culture specific formatting, whereas the known background art does not perform this separation. Embodiments provide reduced complexity standards for representing numeric objects as, for example, a Number , whereas the known background art does not perform this reduced complexity.

Consider the problem of trying to convert a numeric value into a string or vice versa, e.g., in order to convert the numeric value with a predefined syntax into a machine readable format, to convert the numeric value into a conventional human-readable format to show to a human being. Suppose the numeric value is the double-precision value 1234567.89. In C#, if we wanted to display this numeric value for a user to view, with a predetermined formatting, we might use the following syntax to invoke a function in a formatting library (e.g., Microsoft Developer Network (MSDN) .NET™) as illustrated below in Table 3:

**Table 3.**

| |
|---|
| ```
       double n = 1234567.89;
       var x = String.Format(CultureInfo.CurrentCulture, "{0:N2}", n);
        // outputs 1,234,567.89 if culture is en-U.S.
``` |

The call to string. Format () as illustrated above serves several uses or purposes. The syntax conventionally will mean what ever the developer of the formatting library designed it to mean during development of the formatting library, and a developer of a software application that invokes the formatting library must know of the definition by the formatting library in order to use the formatting library. For example, the parameter "CultureInfo. CurrentCulture" may identify what value (i.e., what culture) that the thread culture should be set to. The "0 : N2" parameter may be defined as meaning "format this as a number including grouping symbols and decimal points, and allow up to 2 decimal places to be shown."

Problems and inefficiencies can arise for application program developers who need to write and maintain a line of code that invokes the formatting library. First, the definition of "N" or "N2" or "0:N2" is not necessarily obvious or intuitive, and there may not exist a convention from which the meaning could be inferred, particularly if there are no other functions in the formatting library that are similar to string. Format (), or if there are many optional parameters, syntaxes, or other idiosyncrasies. A developer of a software application may have to resort to frequent consultations with technical documentation or other help resources until they remember the idiosyncrasies due to repetition. The problem may be exasperated over time as other software developers may invoke the string. Format () formatting call directly, or with a different set of parameters than what the first developer prefers, or with different values, or with reliance upon default values for some of the parameter, and so forth. Over time and over the population of application software developers who work on code that uses the formatting library, the application software may start outputting to users numeric values that may have inconsistent formatting, that are weakly intentionally consistent at best, and may seem entirely illogical to users, thus leading to user confusion and dissatisfaction with the software application.

Embodiments in accordance with the present disclosure address the problems identified in the preceding paragraphs by providing a middleware software that automatically determines the correct numeric formatting for the user of a software application, without a need for a developer of the software application to keep track of syntactic idiosyncrasies of the underlying calls to formatting libraries or to make adjustments as characteristics of a user changes (e.g., present geographic location). The formatting may be automatically adjusted based upon an information about the user or the data, such as the user's home culture, the culture of where the user is presently located, the type of data being represented, and so forth. For example, using embodiments in accordance with the present disclosure, an application software developer may rewrite the code from Table 3 in a more simple and maintainable form, as illustrated below in Table 4:

**Table 4.**

| |
|---|
| ```
       double n = 1234567.89;
       var x = Linguist.Represent(n) .AsDefault () ;
``` |

The format of Table 4 advantageously limits options and choices available to the application software developer, thereby limiting complexity. For example, there is no list of multiple calling parameters with non-obvious syntax as there is with the code example of Table 3. There is less chance of an application software developer using inconsistent or in appropriate numeric formatting. The application software developer can rely upon the embodiments described herein to hide the implementation details of numeric formatting during software development, and allow the application software developer to concentrate on other parts of the application, and design the application software at a higher level of abstraction. This is likely to result in a more consistent user experience for the user of the application and thus greater user satisfaction.

The format of Table 4 involves usage of an "AsDefault ()" function call. This function call forces the representation of the numeric value "n" to be in the most common form for the numeric value "n" to be represented. If the numeric value "n" represents a plain number, AsDefault () would be equivalent to calling AsNumber (). If the numeric value "n" represents a currency, the AsDefault () call would be equivalent to calling "AsCurrency () ". This provides a flexible, data-type-based formatting capability that relieves an application software developer from having to know the data type of a particular variable.

Embodiments in accordance with the present disclosure provide additional benefits. For example, suppose that a software application developer intends to display an abbreviated version of this number to a user, instead of the full number (e.g., a financial report in which currency values may be rounded to the nearest thousand or million dollars and expressed in units of a thousand or million dollars, optionally with a suffix such as "K" or "M" to indicate the order of magnitude that is appropriate to the data type of the numeric data). Characteristics of the abbreviated number (e.g., an appropriate suffix, formatting of the abbreviated number, the appropriate rounding, number of significant digits, etc.) may depend upon the data type of the full number. The conventional art (e.g., MSDN .NET) lacks such a capability to display an abbreviated number with characteristics that are specific to the data type of the number, but embodiments natively support AsAspect () methods and function calls that let an application software developer represent numeric data using a different aspect or representation of the underlying data. Thus, if "n" is a plain numeric value (e.g., a decimal number not representing currency, time, telephone number, etc.), embodiments may be practiced by use of the code illustrated below in Table 5, to produce the output listed in the comments of Table 5. In that example, "M" is is used as the suffix for a plain numeric value to indicate "million" (e.g., a unit of one million or a multiplier of one million).

**Table 5.**

| |
|---|
| ```
       double n = 1234567.89;
       var x = Linguist.ForUser(u) .Represent(n) .AsAspect () ;
        // outputs 1.23 M
``` |

In another example, suppose that "n" represents a currency data type. Embodiments may be practiced by use of the code illustrated below in Table 6, to produce the output listed in the comments of Table 6.

**Table 6.**

| |
|---|
| ```
       Currency c = new Currency(1234567.89) ;
       var x = Linguist.ForUser(u) .Represent(c) .AsAspect () ;
        // outputs $1.23 mil
``` |

In the example of Table 6, "mil" is used as the suffix for a currency value to indicate "million" (e.g., a unit of one million or a multiplier of one million). Furthermore, a currency symbol is included.

In general, the characteristic (e.g., the suffix or other formatting) between different data types such as plain numbers vs currencies may vary from culture to culture, and thus may be culture-specific. For example, the English word "million" translates to 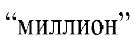 in Russian, therefore the suffix to represent one million may be different in the Russian culture. M is a standard for numbers generally in some cultures, but English users utilize a "mil" abbreviation for currencies. These specific abbreviation choices used here are for illustration and other choices and combinations are contemplated. Embodiments in accordance with the present disclosure hide the complexity of culture-specific and system-specific definitions of numeric formatting. If appropriate definitions change (e.g., a different user with a different home culture, or a user moving among cultures), the appropriate definitions may be used without affecting the underlying application software code.

Settings may also allow for a field of use. For example, setting a field of use to "finance" may cause numbers to be interpreted as currency by default and may be configured to display such numbers by rounding them to the nearest thousand and drop the three least significant digits. On the other hand, a field of use may be set to "scientific," which may cause numbers to be interpreted as plain numbers by default, and may be configured to display such numbers in scientific format (e.g., with mantissa and exponent). The field of use may also affect a suffix used to represent a data type. For example, a "finance" field of use may cause "thou" to be used as a suffix to indicate a currency data type in units of one-thousand, but a "journalism" field of use might cause "G" (abbreviation for a colloquialism "grand") to be used as a suffix to indicate a currency data type in units of one-thousand.

The usefulness of the paradigm provided by embodiments is that an application software developer does not need to be concerned about data representation. The representation details (e.g., formatting) may be managed by the embodiments, thus allowing the application software developer to concentrate on a higher level of abstraction when developing the application software. Embodiments provide a consistent calling interface for the application software developer to use (e.g., "Linguist.Represent () "). The application software developer only needs to think of the idea "represent" in an abstract sense, and then embodiments will take care of representing or interpreting the numeric data, consistent with the type of data, in accordance with system settings (e.g., culture setting, field of use setting, etc.).

Embodiments in accordance with the present disclosure are also usable when interpreting a string value provided by a user, e.g., by interpreting a textual input from a user and converting the textual input to a numeric value, consistent with the culture setting, field of use setting, etc. For example, an application software developer may code the application program to accept a string value from a user, then call or otherwise invoke a software routine provided by embodiments in order to interpret the string value as a specific data type. Compared to the known art, embodiments have an added benefit of being able to parse custom data types and application-specific data types (e.g., a "currency" data type). Embodiments also make dealing with culture considerations more understandable and more consistent.

Embodiments in accordance with the present disclosure may also provide a setting, called "audience," that configures the embodiments in order to tailor the interpretation of an input string value specific to a source that the string value came from, or to tailor the formatting of an output string value specific to how or where the formatted output string value will be used. For example, if an "Audience. User" parameter is used with a Linguist. Interpret () call, embodiments will assume that the source of an input string is a member of an audience, and thus will deal flexibly with group separators, whitespace, and so forth. However, if embodiments were to use an "Audience. System" parameter with a Linguist. Interpret () call, embodiments may be more strict in parsing an input string value and require the value to conform to the value of an InvariantCulture setting (e.g., a cultural setting such as a user's home culture, that does not change based upon the environment that the program is running in), because embodiments may assume that the system generating the string value will be more rigorous in adhering to correct syntax for the input string value, compared to a human. Processing of output string values will similarly be more rigorous when the "Audience. System" parameter is used.

For example, Table 7 illustrates an example of how a value can be read in from a storage device context. Both AsUInt32 and TryAsUnt32 variations are trying to perform the same operation. However, one will cause an exception (i.e., an error condition) and halt program execution if it fails, whereas the other will return a "false" if the interpretation false, but program execution will not halt.

**Table 7.**

| |
|---|
| ```
       uint x = Linguist. Interpret ("9000") .AsUInt32 (Audience. System) ;
       uint y;
       bool parseOk = Linguist. Interpret ("9000") .TryAsUInt32 (out y,
               Audience.System);
``` |

Embodiments in accordance with the present disclosure may operate by usage of objects created in accordance with the IInterpreter interface shown below in Table 8. IInterpreter is used to create objects related to the reception and interpretation of an input string value provided by another entity such as a person or another computer system. Table 8 illustrates data types that include 32-bit integers, 64-bit integers, double precision, single precision floating point, currency, phone number and date/time. However, the paradigm of Table 8 could be extended to additional data types. Table 8 illustrates functional interfaces used: to create each such data type; to create each such data type in light of the audience from; to return a Boolean value whether an input string corresponds to one of the data types; to convert time data a different time zone; and to convert time data to UTC. The functional interfaces may be extended to other functions.

**Table 8.**

| |
|---|
| ```
 public interface IInterpreter {
 uint AsUInt32();
 uint AsUInt32(Audience from);
 bool TryAsUInt32(out uint v);
 bool TryAsUInt32(out uint v, Audience from);
 int AsInt32 () ;
 int AsInt32(Audience from);
 bool TryAsInt32(out int v);
 bool TryAsInt32(out int v, Audience from);
 ulong AsUInt64();
 ulong AsUInt64(Audience from);
 bool TryAsUInt64(out ulong v);
 bool TryAsUInt64(out ulong v, Audience from);
 long AsInt64 () ;
 long AsInt64(Audience from);
 bool TryAsInt64(out long v);
 bool TryAsInt64(out long v, Audience from);
 double AsDouble () ;
 double AsDouble(Audience from);
 bool TryAsDouble(out double v);
 bool TryAsDouble(out double v, Audience from);
 float AsFloat () ;
 float AsFloat(Audience from);
 bool TryAsFloat(out float v);
 bool TryAsFloat(out float v, Audience from);
 Currency AsCurrency () ;
 Currency AsCurrency(Audience from);
 bool TryAsCurrency(out Currency c);
 bool TryAsCurrency(out Currency c, Audience from);
 PhoneNumber AsPhoneNumber () ;
 PhoneNumber AsPhoneNumber(Audience from);
 bool Try AsPhoneNumber(out PhoneNumber p);
 bool Try AsPhoneNumber(out PhoneNumber p, Audience from);
 DateTime AsDateTime () ;
 DateTime AsDateTime(Audience from);
 bool TryAsDateTime(out DateTime d);
 bool TryAsDateTime(out DateTime d, Audience from);
 DateTime AsConvertedDateTime (TimeZoneInfo fromTimeZone, TimeZoneInfo toTimeZone);
 DateTime AsConvertedDateTime (Audience from, TimeZoneInfo fromTimeZone,
       TimeZoneInfo toTimeZone);
       bool TryAsConvertedDateTime (out DateTime d, TimeZoneInfo fromTimeZone,
       TimeZoneInfo toTimeZone);
       bool TryAsConvertedDateTime (out DateTime d, Audience from, TimeZoneInfo
        fromTimeZone, TimeZoneInfo toTimeZone);
        DateTime AsConvertedDateTimeToUtc (TimeZoneInfo fromTimeZone);
        DateTime AsConvertedDateTimeToUtc (Audience from, TimeZoneInfo fromTimeZone);
        bool TryAsConvertedDateTimeToUtc (out DateTime d, TimeZoneInfo fromTimeZone);
        bool TryAsConvertedDateTimeToUtc (out DateTime d, Audience from, TimeZoneInfo
        fromTimeZone);
        DateTime AsConvertedDateTimeFromUtc (TimeZoneInfo toTimeZone);
        DateTime AsConvertedDateTimeFromUtc (Audience from, TimeZoneInfo toTimeZone);
        bool TryAsConvertedDateTimeFromUtc (out DateTime d, TimeZoneInfo toTimeZone);
        bool TryAsConvertedDateTimeFromUtc (out DateTime d, Audience from, TimeZoneInfo
       toTimeZone);
 }
``` |

Embodiments in accordance with the present disclosure may operate with numeric objects created and used in accordance with the IRepresenter interface shown below in Table 9. IRepresenter is used to create an output string object from numeric objects representing various types of numeric data. The output string object is intended to be provided to another entity such as a person or another computer system. Table 9 illustrates an embodiment that is appropriate for data types that include: Default; Number; Aspect; Currency; Percentage; Phone Number; and Date/Time.

**Table 9.**

| |
|---|
| ```
       public interface IRepresenter {
        string AsDefault () ;
        string AsDefault(Audience a);
        string AsNumber () ;
        string AsNumber(Audience a);
        string AsNumber(Audience a, uint decimalPlaces) ;
        string AsAspect () ;
        string AsAspect(AspectStyle style);
        string AsAspect(Audience a, AspectStyle style);
        string AsAspect(Audience a, AspectStyle style, uint decimalPlaces) ;
        string AsAspect(Audience a, AspectStyle style, TimeZoneInfo timeZone) ;
        string AsCurrency () ;
        string AsCurrency(Audience a);
        string AsCurrency(Audience a, uint decimalPlaces) ;
        string AsPercentage () ;
        string AsPercentage (Audience a);
        string AsPercentage (Audience a, uint decimalPlaces) ;
        string AsPhoneNumber () ;
        string AsPhoneNumber(Audience a);
        string AsDateTime () ;
        string AsDateTime(Audience a);
        }
``` |

"Number" differs from "Default" because Default indicates a format that is based upon its data type. For example, using "$1.2".AsDefault() will produce an output formatted as a Currency value, but using "$1.2".AsNumber() will produce an output "1.2" without a currency symbol (e.g., "$") because the latter explicitly asks for the number variation.

Aspect refers to a different way to represent a datum. Date/Time values are examples of varying aspects. For example, a date such as "January 1, 2014" may be represented in various ways such as "Jan 1, 2014", "Jan 1", "January 1", "1/1/2014", "01/01/2014", "2014/01/01", and so forth. Each of these examples is a different aspect of the date "January 1, 2014", nevertheless the data underlying the representation remains a full date and time value.

IInterpreter may operate by interpreting an input string value and creating from it a strongly-typed object. IRepresenter may operate by taking a strongly-typed object and creating from it an output string value, which is much less strongly-typed compared to the object.

Embodiments in accordance with the present disclosure may operate by use of public functional interfaces exposed by the function calls listed below in Table 10. Public functional interfaces include: IRepresenter Represent () to produce an output string of a numeric object of one of various data types; IInterpreter Interpret () to interpret an input string value in order to create a numeric object of one of various data types; string GetQuantityAbbreviation () to return a quantity-specific and/or data-type-specific suffix; IFormatProvider GetRegionFormatProvider () to obtain region-specific information; and TimeZoneInfo GetTimeZoneInfo () to obtain a TimeZone information to use for interpreting dates and times or formatting dates and times.

**Table 10.**

| |
|---|
| ```
       public interface ILinguist {
        IRepresenter Represent(object o) ;
        IInterpreter Interpret(string thing);
        string GetQuantityAbbreviation(QuantityAbbreviation qa);
        IFormatProvider GetRegionFormatProvider () ;
       TimeZoneInfo GetTimeZoneInfo () ;
        }
``` |

Embodiments in accordance with the present disclosure may include built-in logic for handling currencies of any denomination represented by a three letter ISO currency code as well as the amount (e.g. USD 1,000.00 or EUR 1,000.00), handling PhoneNumbers in accordance with various national and international formatting conventions, and parsing date/ time values according to user-specific time zones or UTC-based time zones (e.g. AsConvertedDateTime illustrated in Table 8, above).

FIG. 3 illustrates a process 300 in accordance with an embodiment of the present disclosure. Process 300 may be useful during a transaction in which it is desirable to convert an input string from an external entity to a numeric object, by use of functional interfaces including those described in connection with Table 8 and Table 10. The external entity may be, e.g., terminal 110 as illustrated in FIG. 1 or a user thereof. The transaction may take place substantially worldwide. At least a portion of the process may be executable by numeric information computer 200 as illustrated in FIG. 1, and in particular by data-related importing / exporting routines 201 of FIG. 2. An application program executing in numeric information computer 200 may be executing data-related importing / exporting routines 201 in order to exchange (i.e., import and/or export) numeric data and/or one or more textual representations of the numeric data with the external entity.

Process 300 begins at step 301, at which the application receives an input string value from the external entity.

Next, control of process 300 passes to step 303, at which the application receives configuration information that is relevant to the input string value. For example, the configuration information may include an audience indicator, which may indicate, e.g., whether the input string is from a human user or an automated source, a field of use indicator, a purported data type, and so forth. If the source is a human user, then additional configuration information relevant to the user or to the transaction may be retrieved, such as a home geographic location of the user, a home nation, a home culture, a transaction geographic location, a transaction nation, a transaction culture, a field of use indicator, etc.

Next, control of process 300 passes to step 305, at which a hypothesis is made of the likely data type, or exclusion of unlikely data types. The determination may be made based at least in part upon the information collected by step 303. For example, based upon the format of the input string value, or its value when expressed as an unformatted numeric value, certain data types may be deemed to be likely or unlikely. For example, an input string of the form "(xxx) xxx-xxxx" or "xxx.xxx.xxx" (where "x" is an arbitrary digit) is likely to represent a telephone number, and unlikely to represent a time. On the other hand, an input string of the form "xxx.xxx.xxx.xxx" is likely to represent an IP address rather than a telephone number.

Next, control of process 300 passes to step 307, at which a data object corresponding to the hypothesized data type is created, and the data object may be assigned a value assuming that the input string value in fact is the hypothesized data type.

Next, control of process 300 passes to decision step 309, at which the hypothesized data type may be verified to determine whether the input string value complies with conventions of the hypothesized data type. For example, a nine-digit U.S. telephone number ordinarily does not begin with "911." If the hypothesized data type does not pass verification tests, or of the data object created at step 307 does not pass a correctness test, then control of process 300 may revert to step 307 at which a different data type is hypothesized. If the outcome of step 309 is positive, then process 300 may terminate.

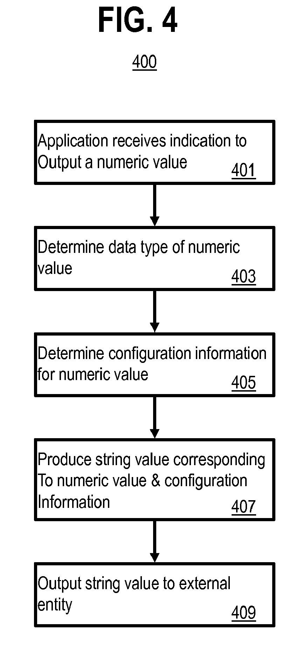

FIG. 4 illustrates a process 400 in accordance with an embodiment of the present disclosure. Process 400 may be useful to convert a numeric data object into an output string value prior to transmission to an external entity, by use of functional interfaces including those described in connection with Table 9 and Table 10. The external entity may be, e.g., terminal 110 as illustrated in FIG. 1 or a user thereof. At least a portion of the process may be executable by numeric information computer 200 as illustrated in FIG. 1, and in particular by data-related importing / exporting routines 201 of FIG. 2. An application program executing in numeric information computer 200 may be executing data-related importing / exporting routines 201 in order to exchange (i.e., import and/or export) numeric data and/or one or more textual representations of the numeric data with the external entity.

Process 400 begins at step 401, at which the application program receives an indication that a string value should be outputted to the external entity. For example, the application program may receive an instruction (e.g., determined algorithmically by the application program, or in response to a request from a user at terminal 110) to output a numeric value to the user at terminal 110.

Next, control of process 400 passes to step 403, at which the application program may determine the data type of the numeric data.

Next, control of process 400 passes to step 405, at which the application program may retrieve or otherwise determine configuration information related to the numeric data. For example, the configuration information may include the type of data object that should be created from the numeric data (e.g., a telephone number, a date, etc.), a culture indicator (e.g., American or European convention for a date or a decimal number, etc.), an audience indicator (e.g., to indicate whether the input string is from a human user or an automated source), a field of use indicator, a purported data type, etc. Such configuration information may be retrieved from one or more of database 105, computer-readable medium 295, and a database accessed through optional database interface 245.

Next, control of process 400 passes to step 407, at which a string value is generated (e.g., serialized), which corresponds to the numeric data and the configuration information. This may be accomplished by use of functional interfaces including those described in connection with Table 9 and Table 10.

Next, control of process 400 passes to step 409, at which the generated string value is transmitted to the output device for outputting (e.g., displaying) to a terminal 110 or a user of terminal 110.

The disclosed methods may be readily implemented in software, such as by using object or object-oriented software development environments that provide portable source code that can be used on a variety of computer or workstation platforms. Alternatively, the disclosed system may be implemented partially or fully in hardware, such as by using standard logic circuits or VLSI design. Whether software or hardware may be used to implement the systems in accordance with various embodiments of the present invention may be dependent on various considerations, such as the speed or efficiency requirements of the system, the particular function, and the particular software or hardware systems being utilized.

While the foregoing is directed to embodiments of the present invention, other and further embodiments of the present invention may be devised without departing from the basic scope thereof. It is understood that various embodiments described herein may be utilized in combination with any other embodiment described, without departing from the scope contained herein. Further, the foregoing description is not intended to be exhaustive or to limit the invention to the precise form disclosed. Modifications and variations are possible in light of the above teachings or may be acquired from practice of the invention. Certain exemplary embodiments may be identified by use of an open-ended list that includes wording to indicate that the list items are representative of the embodiments and that the list is not intended to represent a closed list exclusive of further embodiments. Such wording may include "e.g.," "etc.," "such as," "for example," "and so forth," "and the like," etc., and other wording as will be apparent from the surrounding context.

No element, act, or instruction used in the description of the present application should be construed as critical or essential to the invention unless explicitly described as such. Also, as used herein, the article "a" is intended to include one or more items. Where only one item is intended, the term "one" or similar language is used. Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items.

Moreover, the claims should not be read as limited to the described order or elements unless stated to that effect. In addition, use of the term "means" in any claim is intended to invoke 35 U.S.C. §112,6, and any claim without the word "means" is not so intended.

## Claims

1. An apparatus to serialize electronic localized data, comprising:
a receiver to collect electronic localized data;
a processor coupled to the receiver, the processor configured to receive the electronic localized data collected by the receiver;
a memory coupled to the processor, the memory configured to store an application program;
an interface to a serialization module, to serialize electronic localized data collected by the receiver, wherein the interface is callable from the application program; and
a storage module configured to store the serialized data from the serialization module.

2. The apparatus of claim 1, wherein the serialization module is hosted by the apparatus.

3. The apparatus of claim 1, wherein the serialization module is hosted externally to the apparatus.

4. The apparatus of claim 1, wherein the interface to the serialization module comprises a respective application program interface (API).

5. The apparatus of claim 1, wherein the serialization module further comprises a configuration module to accept a configuration information relevant to the electronic localized data.

6. The apparatus of claim 5, wherein the configuration information comprises a cultural information.

7. The apparatus of claim 5, wherein the configuration information comprises an information selected from a group consisting of a user's home culture, a geographic location, a culture of the geographic location, a type of data, a field of use and an audience.

8. The apparatus of claim 1, wherein the electronic localized data comprises a datum selected from a group consisting of a currency, a date, a time and a telephone number.

9. An apparatus to produce electronic localized data from serialized data, comprising:
a storage module configured to store serialized data;
a processor coupled to the storage module, the processor configured to retrieve the serialized data from the storage module;
a memory coupled to the processor, the memory configured to store an application program;
an interface to a serialization module, the serialization module to produce electronic localized data from serialized data, wherein the interface is callable from the application program; and
a transmitter coupled to the processor, the transmitter configured to transmit the electronic localized data.

10. The apparatus of claim 9, wherein the serialization module is hosted by the apparatus.

11. The apparatus of claim 9, wherein the serialization module is hosted externally to the apparatus.

12. The apparatus of claim 9, wherein the interface to the serialization module comprises a respective application program interface (API).

13. The apparatus of claim 9, wherein the serialization module further comprises a configuration module to accept a configuration information relevant to the electronic localized data.

14. The apparatus of claim 13, wherein the configuration information comprises an information selected from a group consisting of a cultural information, a user's home culture, a geographic location, a culture of the geographic location, a type of data, a field of use and an audience.

15. The apparatus of claim 9, wherein the electronic localized data comprises a datum selected from a group consisting of a currency, a date, a time and a telephone number.
